(19) Europäisches Patentamt
European Patent Office
Office européen des brevets

(11) EP 1 191 048 A1

(12) # DEMANDE DE BREVET EUROPEEN

(43) Date de publication:
**27.03.2002 Bulletin 2002/13**

(51) Int Cl.[7]: **C08G 18/69**, C08G 18/10

(21) Numéro de dépôt: **01402230.5**

(22) Date de dépôt: **27.08.2001**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **21.09.2000 FR 0012025**

(71) Demandeur: **Atofina**
**92800 Puteaux (FR)**

(72) Inventeurs:
- **Martin, Laurent**
  **27400 Bernay (FR)**
- **Dang, Patrick**
  **27300 Bernay (FR)**
- **Deroch, Maxime**
  **Philadelphia 19107 (US)**

(74) Mandataire: **Chaillot, Geneviève**
**Cabinet CHAILLOT,**
**16-20, avenue de L'Agent Sarre,**
**B.P. 74**
**92703 Colombes Cédex (FR)**

(54) **Utilisation de mousses polyuréthannes anti-vibratoires à base de polybutadiène hydroxytéléchélique dans l'isolation mécanique et/ou acoustique à basse température**

(57) L'invention décrit l'utilisation dans le domaine de l'isolation mécanique et/ou acoustique, particulièrement à basse température ou aux hautes fréquences de mousses de polyuréthanne anti-vibratoires.

Les mousses de l'invention sont préparées à partir de polybutadiène hydroxytéléchélique

EP 1 191 048 A1

## Description

La présente invention se rapporte au domaine de l'isolation mécanique et / ou acoustique, en particulier à l'isolation mécanique et/ou acoustique à basse température. Elle se rapporte plus particulièrement à l'utilisation dans ce domaine de mousses polyuréthannes anti-vibratoires à base de polydiène hydroxytéléchélique.

Les problèmes d'isolation mécanique sont souvent résolus par l'utilisation de mousses anti-vibratoires et notamment de mousses polyuréthannes. Ces mousses sont par exemple utilisées en construction ferroviaire et permettent l'isolation mécanique et acoustique des ouvrages d'art (ponts, tunnels) contre les vibrations induites par le passage des trains. Selon l'architecture des ouvrages, de telles mousses peuvent être ainsi placées par exemple entre les rails et le ballast. Ces mousses sont couramment produites à partir de polyols à base de polyester pour les mousses conventionnelles et à partir de polyols à base de polyether (généralement Polytetraméthylène glycol PTMG ou moins fréquemment Polypropylene Glycol PPG) pour les mousses haut de gamme. La principale limitation de ces systèmes réside dans leur mauvais comportement d'isolation aux basses températures. Aux températures négatives ces mousses se rigidifient, et les contraintes mécaniques ne sont plus amorties pouvant conduire à de graves détériorations de structures.

L'objectif de la présente demande est de proposer une solution au problème cité précédement

Bien que les mousses polyuréthannes à base de polydiènes hydroxylés soient connues, personne n'a songé à les utiliser ou à les tester dans le domaine de l'isolation mécanique ou acoustique.

C'est après des longues recherches que la demanderesse a testé avec succès ce type de mousses dans l'isolation mécanique ou acoustique à basse température.

En effet, la demanderesse a découvert que les mousses polyuréthannes à base de polydiènes hydroxylés permettent d'obtenir de bonnes propriétés antivibratoires aux basses températures ainsi qu'une bonne résistance au vieillissement humide. Ces mousses sont particulièrement utiles pour protéger un objet ou une structure des vibrations mécaniques et/ou acoustiques produites par un élément extérieur. On pourra citer comme exemple l'utilisation dans le domaine ferroviaire, où ces mousses peuvent être avantageusement utilisées pour l'isolation anti-vibratoire des ouvrages d'art (ponts, tunnels...). Les vibrations induites par les essieux des trains peuvent en effet provoquer de graves détériorations de structure. De plus, pour ces applications, l'efficacité du système anti-vibratoire doit être assurée à toutes les températures d'utilisation et notamment en période d'hiver aux températures négatives. Les mousses de la présente invention remplissent cette fonction.

Les mousses de l'invention peuvent aussi être utilisées dans divers domaines tels que : antisismique, antivibratoires automobiles, isolation machine-outils.

L'un des objets de l'invention est donc l'utilisation d'une mousse polyuréthane obtenue à partir d'un polydiène hydroxylé téléchélique dans l'isolation mécanique et/ou acoustique à basse température, dans l'isolation mécanique et/ou acoustique à hautes fréquences et dans les applications nécessitant des matériaux ayant une bonne tenue au vieillissement climatique.

La mousse de polyuréthanne de l'invention, réalisée à partir d'un polydiène hydroxylé et d'un polyisocyanate est telle que ses propriétés d'isolation anti-vibratoire (exprimées par exemple en terme de module dynamique E' ou de transmissibilité T) restent bonnes aux basses températures. De plus ces mousses offrent aussi une excellente isolation des vibrations aux hautes-fréquences.

La mousse de l'invention peut être préparée par plusieurs procédés simples. Le but de la procédure étant d'obtenir une mousse polyuréthanne à base (pour part ou complètement) d'un polydiène hydroxylé. Il suffit de mélanger un polyol (A), l'agent d'expansion par exemple l'eau, les tensioactifs, les catalyseurs et éventuellement les diols courts allongeurs de chaînes et les charges; on obtient alors une émulsion fine et laiteuse, très stable qui peut être conservée plusieurs semaines. A cette émulsion on ajoute un polyisocyanate (B), puis on la verse en quantité appropriée dans un moule ou sur une surface horizontale. Les mousses peuvent être réalisées en expansion libre, ou en moule fermé.

De manière générale pour réaliser l'invention on mélange une partie I contenant un polyol (A ) de type polydiène hydroxytéléchélique et le polyisocyanate (B). On peut cependant utiliser d'autres voies telles que :

- Le polyol (A) est un polyol base polyether ou polyester et (B) un prépolymère d'isocyanate sur base d' un polydiene hydroxylé
- Le polyol (A) est un polydiene hydroxylé et (B) un prépolymère d'isocyanate sur base d' un polyol polyether ou polyester

Dans les deux derniers cas nous parlerons de mousses hybrides.

L'intérêt de l'utilisation du polybutadiène hydroxylé est de conférer d'excellentes propriétés dynamiques (i.e. antivibratoire) aux basses températures. De plus les mousses obtenues comme décrites ci-dessus possèdent une bonne tenue au vieillissement climatique

A titre d'illustration de polydiènes-hydroxylés (appelés aussi polydiène polyols) utilisables selon la présente

invention, on citera les oligomères de diène conjugué hydroxytéléchélique qui peuvent être obtenus par différents procédés tels que la polymérisation radicalaire de diène conjugué ayant de 4 à 20 atomes de carbone en présence d'un amorceur de polymérisation tel que le peroxyde d'hydrogène ou un composé azoïque tel que l'azobis-2,2'[méthyl-2, N-(hydroxy-2éthyl)propionamide] ou la polymérisation anionique de diène conjugué ayant de 4 à 20 atomes de carbone en présence d'un catalyseur tel que le naphtalène dilithium.

Selon la présente invention, le diène conjugué du polydiène-polyol est choisi dans le groupe comprenant le butadiène, l'isoprène, le chloroprène, le pentadiène-1,3, le cyclopentadiène. La masse molaire moyenne en nombre des polyols utilisables peut varier de 500 à 15 000 et de préférence de 1000 à 3000.

Selon la présente invention, on utilisera de préférence un polydiène-polyol à base de butadiène. Avantageusement, le polydiène glycol comprend 70 à 85 % en mole de préférence 80 % de motifs

$$-(-CH_2-CH=CH-CH_2-)-$$

et 15 à 30 % de préférence 20 % de motifs

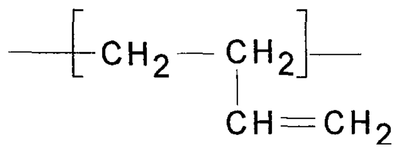

conviennent également les copolymères de diènes conjugués et de monomères vinylique et acrylique tels que le styrène, l'acrylonitrile.

On ne sortirait pas de l'invention si on utilisait des oligomères hydroxytélécheliques de butadiène époxydés sur la chaîne ou bien encore des oligomères hydrogénés hydroxytéléchéliques de diènes conjugués.

Selon la présente invention, les polydiènes-polyols peuvent avoir des masses moléculaires moyennes en nombre au plus égale à 7000 et de préférence comprise entre 1000 et 3000.

L'indice d'OH exprimé en méq/g est compris entre 0,5 et 5, leur viscosité est comprise entre 1000 et 10 000 m Pa.s.

Avantageusement, leur nombre de fonctions OH par molécule est d'au moins 1,8 et de préférence compris entre 2 et 3.

A titre d'illustration de polydiènes-polyols, on citera les polybutadiènes à terminaisons hydroxylées commercialisés par la Société ATOFINA. sous les dénominations Poly Bd® R45 HT et Poly Bd® R20 LM.

On peut utiliser des mélanges des composés précédemment mentionnés. La mousse de l'invention peut comprendre un allongeur de chaîne. Par allongeur de chaîne, on désigne présentement des composés portant au moins deux fonctions réactives avec les fonctions isocyanates. Comme exemples de telles fonctions réactives, on citera les fonctions hydroxyle et les fonctions amine.Selon l'invention, l'allongeur de chaîne peut être choisi parmi les polyols. Leur masse moléculaire peut être comprise entre 62 et 500.

A titre d'illustration de tels composés, on citera l'éthylène glycol, le propylène glycol, le diéthylène glycol, le dipropylène glycol, le 1,4-butanediol, le 1,6-hexanediol, le 2-éthyl-1,3-hexanediol, le N,N bis(hydroxy-2 propyl)aniline, le 3-méthyl-1,5-pentanediol et le mélange d'au moins deux des composés précités.

On peut également utiliser comme allongeurs de chaîne des polyamines. Leur masse moléculaire peut être comprise entre 60 et 500.

A titre d'illustration de telles polyamines, on citera l'éthylène diamine, la diphényl méthane diamine, l'isophoronediamine, l'hexaméthylenediamine, la diéthyltoluènediamine.

On utilisera au moins une partie en poids d'un ou plusieurs allongeurs de chaîne précités pour 100 parties en poids de polyol mis en oeuvre et, de préférence 2 à 30 parties en poids.

On peut ajouter un catalyseur qui peut être choisi dans le groupe comprenant des amines tertiaires, des imidazoles et des composés organométalliques.

A titre d'illustration d'amines tertiaires, on peut citer le diaza-1,4 bicyclo[2.2.2]octane (DABCO).

A titre d'illustration de composés organométalliques, on peut citer le dibutyldilaurate d'étain, le dibutyldiacétate d'étain.

Les quantités de catalyseur peuvent être comprises entre 0,01 et 5 parties en poids pour 100 parties en poids de polyol.

La composition selon l'invention peut contenir en outre des charges inertes et divers additifs tels que des anti-oxydants, des anti U-V.

Selon la présente invention, le polyisocyanate utilisé peut être un polyisocyanate aromatique, aliphatique ou cycloaliphatique ayant au moins deux fonctions isocyanate dans sa molécule.
Le polyisocyanate polymérique comprend dans sa chaîne au moins deux motifs portant chacun au moins une fonction isocyanate.
Avantageusement, on utilise le produit de formule

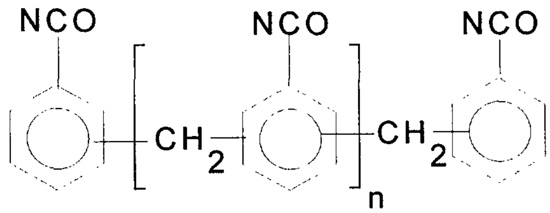

qu'on désigne par PMDI.

Avantageusement les isocyanates sont utilisés en des quantités telles que le rapport molaire NCO/OH est compris entre 0,6 et 2 et de préférence essentiellement égal ou peu différent de 1.

Le rapport molaire NCO/OH doit être calculé en tenant compte de la présence des fonctions réactives avec les fonctions isocyanates, telles que les fonctions hydroxyles et/ou amines, de l'allongeur de chaîne et de l'eau.

L'agent moussant provient de la réaction de l'eau sur l'isocyanate. La quantité d'eau nécessaire peut être comprise entre 0,1 et 4 parties en poids et de préférence 0,4 et 1 pour 100 parties de polydiène hydroxylé.

Les exemples suivants illustrent l'invention sans en limiter la portée.

EXEMPLES

Méthode de caractérisation :

Les mesures des propriétés d'isolation anti-vibratoires des mousses polyuréthannes sont effectuées par compression dynamique en DMA (Dynamic Mechanical Analysis). Cette procédure d'analyse permet de caractériser précisément le comportement d'un matériau soumis à une vibration en compression et est généralement utilisée par la profession : Un échantillon de mousse (dimension 50×50×20 mm) est soumis à une pré-charge m, et à une vibration de fréquence f et contrainte imposée $\Delta$m. La mousse est soumise à une précharge correspondant à une contrainte située dans la zone de module constant de la courbe de compression à température ambiante.
Les valeurs de K' (raideur de conservation), K" (raideur de perte) et Tan $\delta$=K"/K' permettent alors de calculer la transmissibilité à différentes températures. La transmissibilité représente le pourcentage d'énergie de la sollicitation transmis au support. Dans le cas d'une application ferroviaire, cela représente la quantité de l'énergie générée par le passage du train qui est transmise à l'ouvrage d'art. La transmissibilité se calcule comme ceci :

$$Tr = \sqrt{\frac{K'^2 + K''^2}{(K' - m\omega^2)^2 + K''^2}}$$

C=Damping (Coefficient d'amortissement)
C=K*× sinus($\varphi$)/(2$\pi$f)
K*=raideur complexe
f=fréquence
$\varphi$=déphasage
$\omega$=2$\pi$f = pulsation
m = masse moyenne appliquée = charge moyenne /constante de gravité(g)

Un exemple de courbe de transmissibilité est donné en figure 1.

Exemple n°1 : mousse PolyBd R45HT

Dans un premier temps le PolyBd R45HT, les tensio-actifs, l'agent moussant, les catalyseurs et les diols courts sont mélangés à l'aide d'une turbine. Une émulsion fine et laiteuse est obtenue. Cette émulsion est stable au

stockage. A cette émulsion on ajoute un isocyanate, qui peut être par exemple le Suprasec DNR (MDI modifié liquide produit par la société ICI). Le mélange est réalisé à l'aide d'une turbine. Après quelques secondes d'agitation, une masse m de formulation est versée dans un moule ou versée sur une surface plane préalablement traités avec un agent démoulant. Après expansion et réticulation de la mousse des échantillons parallélépipédiques de dimension 50×50×20 mm3 sont prélevés et analysés en DMA.

Pour l'exemple 1, on a utilisé la formulation suivante :

Tableau I

| Type de Réactif | Nom | Fournisseur | Masse (en g) | Commentaires |
|---|---|---|---|---|
| Polyol | Poly Bd R45HT | ATOFINA | 100 | Densité≈280g/l |
| Diol court | Dipropylene glycol | ARCO | 5 | Agitation Partie A=2000tr/min pdt 2min Partie A+B=2000tr/min pdt 15s |
| Agent Moussant | Eau | / | 0.2 | |
| Tensio Actif | Niax L1000 | Witco | 0.1 | |
| Catalyseur | Toyocat MR | TOSOH | 0.5 | |
| Diisocyanate | Suprasec DNR | ICI | 24.33 | |

Les résultats de cet exemple sont présentés dans le graphique I, figure 2 et le tableau comparatif IV, figure 4.

Exemple n°2 : mousse hybride PTMG / PolyBd R45HT

Dans un premier temps un pré-polymère est préparé à partir de PolyBd R45HT en présence d'un excès de di-isocyanate (par exemple ISONATE M125). Pour ceci 100 g de PolyBd R45HT est tout d'abord à dégazé pendant 1 heure à 80°C sous vide afin d'éliminer l'humidité résiduelle. Ensuite 58.31 grammes d'isonate M125 sont ajoutés à 50°C et la réaction est maintenue 3 heures à 80°C sous vide. Le pré-polymère est dépoté à 30°C puis stocké après un barbotage d'azote. Ce pré-polymère a un pourcentage d'isocyanate égal à 9.47% et une viscosité d'environ 5000 mPa.s.

Ensuite 75 g de poly(tétraméthylene)glycol PTMG (qui pourra par exemple être le TERATHANE 2000 produit par Dupont), les tensio-actifs, l'agent moussant, les catalyseurs et les diols courts sont mélangés à l'aide d'une turbine. Une émulsion fine et laiteuse est obtenue. Cette émulsion est stable au stockage. A cette émulsion on ajoute un mélange de 7.70 grammes de d'ISONATE M125 et de 39.68 grammes de pré-polymère de MDI base PolyBd précédemment préparé. Le mélange est réalisé à l'aide d'une turbine. Après quelques secondes d'agitation, une masse m de formulation est versée dans un moule ou versée sur une surface plane préalablement traités avec un agent démoulant. Après expansion et réticulation de la mousse des échantillons parallélépipédiques de dimension 50×50×20 mm3 sont prélevés et analysés en DMA. Cette mousse sera dite « hybride 75/25» (polyol : 75% PMTG / 25% PolyBd)

Pour l'exemple 2, on a utilisé la formulation suivante :

Tableau II

| Type de Réactif | Nom | Fournisseur | Masse (en g) | Commentaires |
|---|---|---|---|---|
| Polyol | TERATHANE 2000 | Dupont | 75 | Densité≈277g/l |
| Pre-polymere | Prepolymère base PolyBd | / | 39.68 | Agitation Partie A=2000tr/min pdt 2min Partie A+B=2000tr/min pdt 15s |
| A.C | Glycérol | ATOFINA | 1 | |
| Agent Moussant | Eau | / | 0.4 | |
| Tensio Actif | Niax L1000 | Witco | 0.5 | |
| Catalyseur | Toyocat MR | TOSOH | 0.5 | |
| Di-isocyanate | Isonate M125 | Dow | 7.70 | |

Les résultats de cet exemple sont présentés dans le graphique II, figure 2 et le tableau comparatif IV, figure 4.

Exemple n°3 (comparatif): mousse poly(tétraméthylene)glycol PTMG

A titre comparatif, une mousse à base de PTMG a été réalisée dans les même conditions afin de mieux mettre

en évidence les propriétés d'isolation anti-vibratoires aux basses températures des mousses de la présente invention comme décrites dans les exemples 1 et 2. Pour cela le poly(tétraméthylene)glycol PTMG (qui pourra par exemple être le TERATHANE 2000 produit par Dupont), les tensio-actifs, l'agent moussant, les catalyseurs et les diols courts sont mélangés à l'aide d'une turbine. Une émulsion fine et laiteuse est obtenue. Cette émulsion est stable au stockage. A cette émulsion on ajoute un isocyanate, qui peut être par exemple le Suprasec DNR (MDI modifié liquide produit par la société ICI). Le mélange est réalisé à l'aide d'une turbine. Après quelques secondes d'agitation, une masse m de formulation est versée dans un moule ou versée sur une surface plane préalablement traités avec un agent démoulant. Après expansion et réticulation de la mousse des échantillons parallélépipédiques de dimension 50×50×20 mm3 sont prélevés et analysés en DMA.

Pour l'exemple 3, on a utilisé la formulation suivante :

Tableau III

| Type de Réactif | Nom | Fournisseur | Masse (en g) | Commentaires |
|---|---|---|---|---|
| Polyol | TERATHANE 2000 | Dupont | 100 | Densité≈240 g/l |
| Diol court | Glycerol | ATOFINA | 1 | Agitation Partie A=2000tr/min pdt 2min Partie A+B=2000tr/min pdt 15s |
| Agent Moussant | Eau | / | 0.4 | |
| Tensio Actif | Niax L1000 | Witco | 0.1 | |
| Catalyseur | TOYCAT MR | TOSOH | 2 | |
| Diisocyanate | Suprasec DNR | ICI | 24.09 | |

Les résultats sont regroupés dans le graphique III, figure 3 ainsi que dans le tableau récapitulatif IV, figure 4.

Exemple n°4 (comparatif): Amortissement aux hautes fréquences

Les propriétés antivibratoires d'une mousse commerciale sur base d'un polyol poly(tétraméthylene)glycol et d'une mousse sur base du PolyBd R45HT ont été comparées dans la zone des hautes fréquences (i.e. 108Hz) en utilisant la procédure de caractérisation décrite ci-dessus. Ces mousses présentent une densité de 600 gammes par litre. Le graphique V, réalisé en ce basant sur l'équivalence temps-température des matériaux visco-élastiques, présentent les résultats en terme du module dynamique élastique E' en fonction de la fréquence. La température de référence à été arbitrairement choisie à Tref=-20°C.

Pour cet exemple la mousse base PolyBd R45HT de densité 600 g/l a la composition suivante :

Tableau IV

| Type de Réactif | Nom | Fournisseur | Masse (en g) | Commentaires |
|---|---|---|---|---|
| Polyol | Poly Bd R45HT | ATOFINA | 100 | Densité≈600g/l |
| Diol court | 1,4 Butane diol | DUPONT | 4 | Agitation Partie A=2000tr/min pdt 2min 2min Partie A+B=2000tr/min pdt 15s |
| Agent Moussant | Eau | / | 0.2 | |
| Tensio Actif | Niax L1000 | Witco | 0.2 | |
| Catalyseurs | Dabco DC 1 Dabco T12CL | Air Product | 0.3 0.1 | |
| Diisocyanate | Lupranat MP200 | Elastogran | 24.33 | |

Les résultats sont présentés en figure 3, graphique IV.

Une très forte rigidification de la mousse à base de poly(tétraméthylene)glycol est observée aux hautes fréquences. Ceci se traduit pour l'application visée par une perte des propriétés anti-vibratoires à ces hautes fréquences. Comparativement le module dynamique E' de la mousse base PolyBd R45HT reste faible aux hautes fréquences. Alors qu'à une fréquence de 10 Hz les deux mousses présentent des modules dynamiques similaires (donc des propriétés anti-vibratoires comparables), lorsque la fréquence d'excitation atteint 106 Hz, la mousse à base de poly(tétraméthylene)glycol présente un module E' à 117 MPa contre 29.6 MPa pour la mousse base PolyBd R45HT, soit une rigidité environ 4 fois supérieure.

**Revendications**

1. Utilisation d'une mousse polyuréthanne dans l'isolation mécanique et/ou acoustique à basse température **caractérisée en ce que** la mousse est préparée selon l'une quelconque des voies suivantes :

   - par réaction d'un polyol classique et d'un prépolymère d'isocyanate obtenu à partir d' un polydiène hydroxytéléchélique,
   - par réaction du polydiène hydroxytéléchélique et d'un prépolymère d'isocyanate obtenu à partir d'un polyol classique
   - par réaction du polydiène hydroxytéléchélique et d'un isocyanate.

2. Utilisation selon la revendication 1 **caractérisée en ce que** le diène servant à préparer le polydiène hydroxytéléchélique est choisi parmi le butadiène, l'isoprène, le chloroprène, le pentadiène-1,3, le cyclopentadiène

3. Utilisation selon la revendication 2 **caractérisée en ce que** ledit diène est le butadiène

4. Utilisation selon l'une des revendications précédentes **caractérisée en ce que** le polydiène hydroxytéléchélique présente une masse moyenne en nombre comprise entre 500 et 15000 et de préférence entre 1000 et 3000 et un indice d'hydroxy compris entre 0,5 et 5 méq/g.

FIGURE 1

Exemple de courbe de transmissibilité

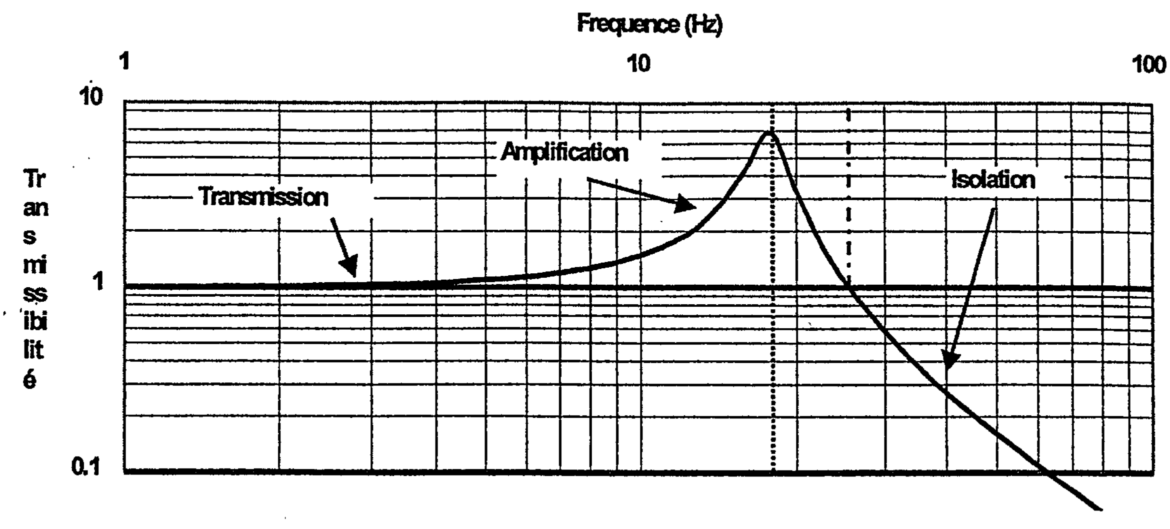

# FIGURE 2

Graphique I : courbe de transmissibilité à différentes températures pour la mousse de l'exemple 1

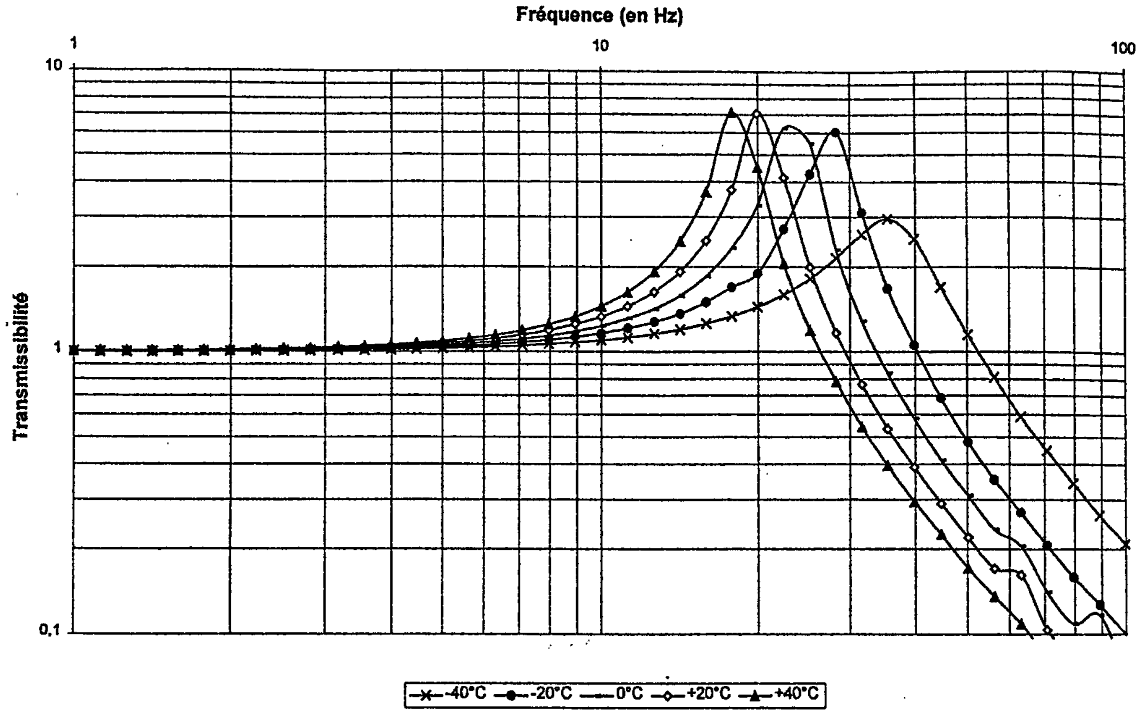


Graphique II : courbe de transmissibilité à différentes températures pour la mousse de l'exemple 2

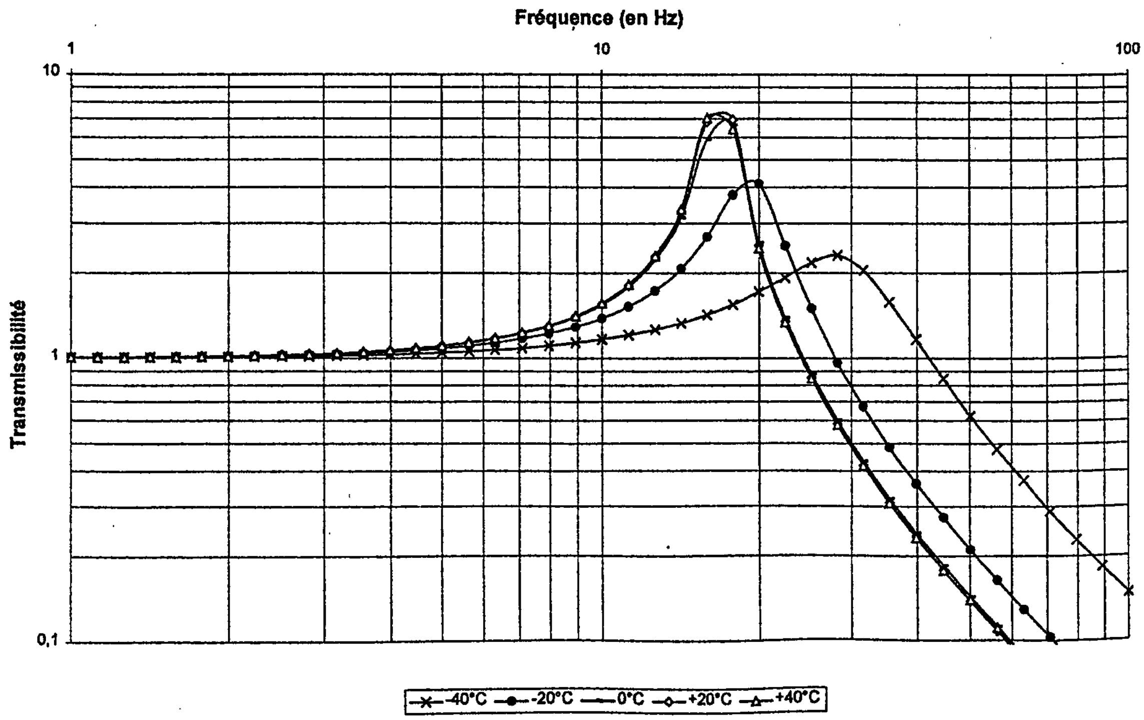

## FIGURE 3

Graphique III : courbe de transmissibilité à différentes températures pour la mousse de l'exemple 3

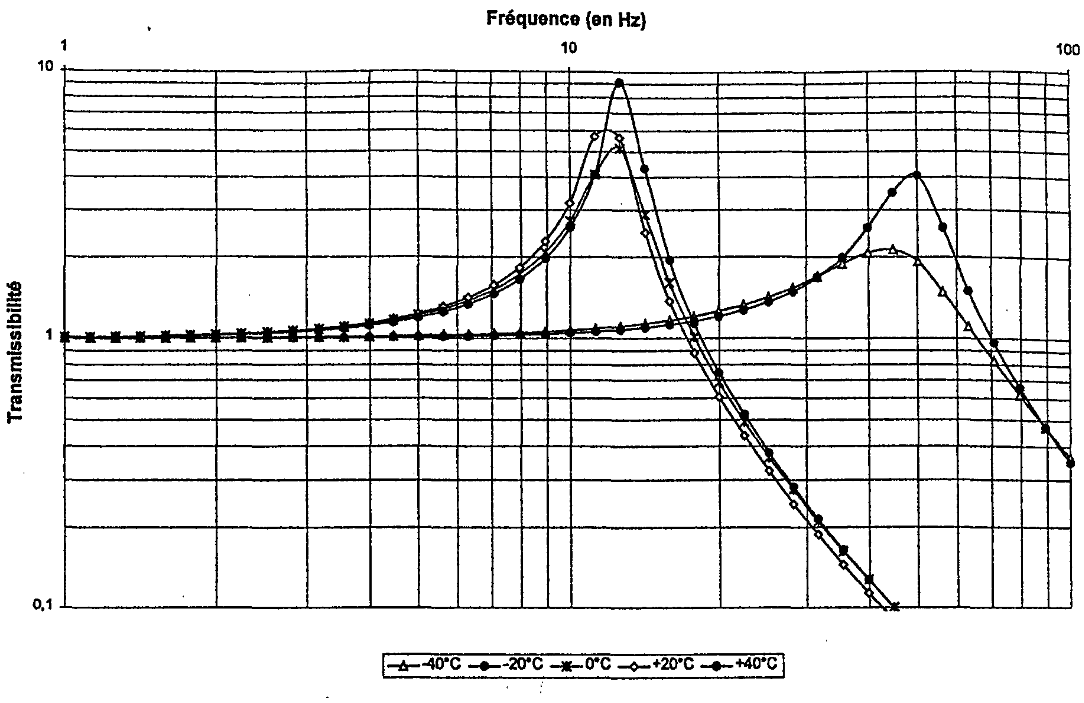


Graphique IV : Comparaison de l'évolution du module dynamique E' d'une mousse base PTMG et d'une mousse base PolyBd R45HT aux hautes fréquences. (cf. exemple comparatif 4)

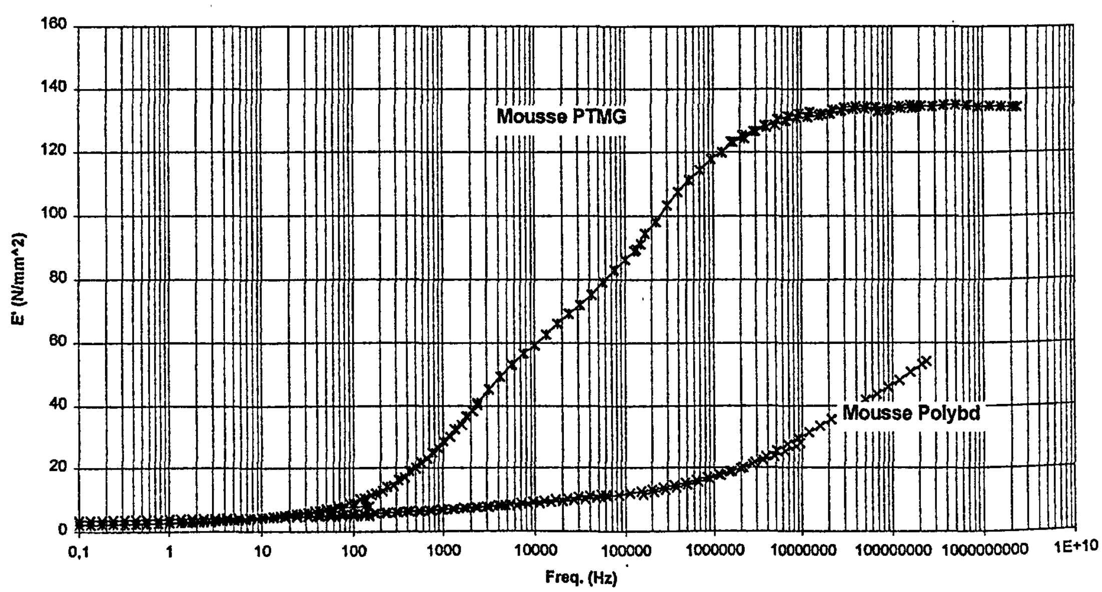

FIGURE 4

Tableau V : récapitulatif

| Formulation | | Exemple 1 Mousse PolyBd | Exemple 2 Mousse hybride | Exemple 3 Mousse PTMG Exemple comparatif |
|---|---|---|---|---|
| PolyBd R45HT | | 100 | - | - |
| TERATHANE 2000 | | - | 75 | 100 |
| Dipropylene glycol | | 5 | - | - |
| Glycérol | | - | 1 | 1 |
| Eau | | 0.2 | 0.4 | 0.4 |
| Niax L1000 | | 0.1 | 0.5 | 0.1 |
| TOYCAT MR | | 0.5 | 0.5 | 2 |
| Suprasec DNR | | 24.33 | - | 24.09 |
| Pré-polymère base PolyBd | | - | 39.68 | - |
| ISONATE M143 | | - | 7.70 | - |
| Caractéristiques | | | | |
| Densité globale (g/l) | | 277 | 240 | 240 |
| Module E' @ 10Hz (Mpa) | @+40°C | 0,745 | 0,66 | 0,387 |
| | @+20°C | 0,919 | 0,67 | 0,337 |
| | @0°C | 1,206 | 0,67 | 0,356 |
| | @-20°C | 1,621 | 0,83 | 4,942 |
| | @-40°C | 2,447 | 1,43 | 2,912 |
| Tangente δ @ 100 Hz | @+40°C | 0,14 | 0,11 | 0,104 |
| | @+20°C | 0,147 | 0,13 | 0,138 |
| | @0°C | 0,148 | 0,17 | 0,215 |
| | @-20°C | 0,191 | 0,34 | 0,247 |
| | @-40°C | 0,483 | 0,6 | 0,544 |
| Fréquences isolées (Hz) | @+40°C | f>25 Hz | f>25 Hz | f>18 Hz |
| | @+20°C | f>28 Hz | f>25 Hz | f>18 Hz |
| | @0°C | f>30 Hz | f>25 Hz | f>18 Hz |
| | @-20°C | f>40 Hz | f>28 Hz | f>70 Hz |
| | @-40°C | f>50 Hz | f>40 Hz | f>70 Hz |
| **Pouvoir Isolant* @100hz** | **@+40°C** | **95.6%** | **97.0%** | **98.0%** |
| | **@+20°C** | **94.4%** | **97.0%** | **98.2%** |
| | **@0°C** | **92.6%** | **96.0%** | **97.9%** |
| | **@-20°C** | **89.4%** | **95.0%** | **64.9%** |
| | **@-40°C** | **77.0%** | **85.0%** | **63.5%** |

*pourcentage d'énergie absorbée (=100% - transmissibilité).

Office européen des brevets

# RAPPORT DE RECHERCHE EUROPEENNE

Numéro de la demande
EP 01 40 2230

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | US 5 114 982 A (MENDELSOHN MORRIS A ET AL) 19 mai 1992 (1992-05-19)<br>* colonne 4, ligne 21 - colonne 7, ligne 19; revendication 1 *<br>--- | 1-4 | C08G18/69<br>C08G18/10 |
| X | US 4 412 013 A (CHANG YUN F) 25 octobre 1983 (1983-10-25)<br>* colonne 3, ligne 23 - ligne 41; revendication 1 *<br>--- | 1-4 | |
| X | DE 37 34 070 A (SIEMENS AG) 20 avril 1989 (1989-04-20)<br>* revendication 1 *<br>--- | 1-3 | |
| Y | CHEMICAL ABSTRACTS + INDEXES,US,AMERICAN CHEMICAL SOCIETY. COLUMBUS,<br>vol. 112, no. 16,<br>16 avril 1990 (1990-04-16), XP000188244<br>ISSN: 0009-2258<br>*abstract*<br>--- | 1-4 | |
| Y | FR 2 765 227 A (ATOCHEM ELF SA) 31 décembre 1998 (1998-12-31)<br>* page 6, ligne 30 - ligne 35; revendication 1 *<br>----- | 1-4 | DOMAINES TECHNIQUES RECHERCHES (Int.Cl.7)<br>C08G |

Le présent rapport a été établi pour toutes les revendications

| Lieu de la recherche | Date d'achèvement de la recherche | Examinateur |
|---|---|---|
| BERLIN | 13 décembre 2001 | Angiolini, D |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.........................................................
& : membre de la même famille, document correspondant

EPO FORM 1503 03.82 (P04C02)

## ANNEXE AU RAPPORT DE RECHERCHE EUROPEENNE RELATIF A LA DEMANDE DE BREVET EUROPEEN NO.

EP 01 40 2230

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

13-12-2001

| Document brevet cité au rapport de recherche | | Date de publication | Membre(s) de la famille de brevet(s) | | Date de publication |
|---|---|---|---|---|---|
| US 5114982 | A | 19-05-1992 | AUCUN | | |
| US 4412013 | A | 25-10-1983 | CA | 1210550 A1 | 26-08-1986 |
| DE 3734070 | A | 20-04-1989 | DE | 3734070 A1 | 20-04-1989 |
| FR 2765227 | A | 31-12-1998 | FR | 2765227 A1 | 31-12-1998 |
| | | | AU | 8344698 A | 19-01-1999 |
| | | | WO | 9900438 A1 | 07-01-1999 |

EPO FORM P0460

Pour tout renseignement concernant cette annexe : voir Journal Officiel de l'Office européen des brevets, No.12/82